(19) Europäisches Patentamt
European Patent Office
Office européen des brevets

(11) **EP 2 382 453 B1**

(12) **FASCICULE DE BREVET EUROPEEN**

(45) Date de publication et mention de la délivrance du brevet:
**21.03.2018 Bulletin 2018/12**

(21) Numéro de dépôt: **10706292.9**

(22) Date de dépôt: **11.01.2010**

(51) Int Cl.:
*G01N 17/00* *(2006.01)*      *G01N 25/18* *(2006.01)*

(86) Numéro de dépôt international:
**PCT/FR2010/050033**

(87) Numéro de publication internationale:
**WO 2010/079311 (15.07.2010 Gazette 2010/28)**

(54) **CAPTEUR ET PROCÉDÉ DE MESURE EN CONTINU DU NIVEAU D'ENCRASSEMENT**

SENSOR UND VERFAHREN ZUR KONTINUIERLICHEN MESSUNG EINES VERFAULUNGSGRADES

SENSOR, AND METHOD FOR CONTINUOUSLY MEASURING THE FOULING LEVEL

(84) Etats contractants désignés:
AT BE BG CH CY CZ DE DK EE ES FI FR GB GR HR HU IE IS IT LI LT LU LV MC MK MT NL NO PL PT RO SE SI SK SM TR

(30) Priorité: **09.01.2009 FR 0950112**

(43) Date de publication de la demande:
**02.11.2011 Bulletin 2011/44**

(73) Titulaire: **Aqualabo Services**
**94506 Champigny-sur-Marne (FR)**

(72) Inventeurs:
• **AURET, Laurent**
**F-31560 Nailloux (FR)**
• **GISPERT, Camille**
**F-31500 Toulouse (FR)**
• **FILLAUDEAU, Luc**
**F-31320 Castanet-Tolosan (FR)**
• **DEBREYNE, Pascal**
**F-59273 Fretin (FR)**

(74) Mandataire: **Petit, Maxime et al**
**Ipsilon**
**Le Centralis**
**63, avenue du Général Leclerc**
**92340 Bourg-la-Reine (FR)**

(56) Documents cités:
**EP-A- 1 878 501      FR-A- 2 493 523**
**FR-A- 2 788 600      FR-A- 2 897 930**

EP 2 382 453 B1

**Description**

L'invention concerne un capteur de mesure ou de détection de l'encrassement d'un réacteur ou d'une conduite contenant un fluide.

Sur les sites industriels, on trouve différents types d'installations dans lesquelles circulent des fluides de natures diverses.

Ces installations comprennent des conduites dans lesquelles circulent des fluides et peuvent comprendre également des réacteurs comme par exemple des échangeurs thermiques

Dans ce cas précis, l'encrassement de telles installations peut s'avérer préjudiciable dans la mesure où il est susceptible d'affecter les performances de l'installation (par exemple le rendement d'un processus industriel).

En outre, lorsqu'un encrassement se forme sur la paroi interne d'une conduite ou d'un réacteur, il convient de procéder à son nettoyage au bon moment.

Il faut toutefois que cet encrassement soit décelable en continu par les opérateurs ou le personnel de maintenance de l'installation afin de pouvoir apprécier, dans le cadre d'une maintenance préventive, le meilleur moment pour réaliser les nettoyages.

En tout état de cause, les encrassements provoquent irrégulièrement l'arrêt de l'installation et ce, pendant une durée parfois indéterminée, ce qui pénalise fortement le déroulement du processus industriel.

Ces interventions peuvent représenter des tâches pénibles pour le personnel, d'autant plus si l'encrassement n'a été détecté que tardivement et si son épaisseur est trop importante.

Ce désencrassement présente un coût économique non négligeable puisqu'il convient d'intégrer au coût des opérations de maintenance le coût induit par l'arrêt temporaire de l'exploitation.

On notera également qu'au fur et à mesure que les échangeurs thermiques s'encrassent, il s'ensuit une perte d'efficacité progressive, avant un arrêt de fonctionnement potentiel de l'installation ou de la partie de l'installation comprenant ces échangeurs.

Par ailleurs, dans les réseaux d'eau chaude sanitaire et dans les tours aéroréfrigérées industrielles ouvertes, des bactéries peuvent se développer à l'intérieur du réseau et du circuit de refroidissement.

De même, un risque de contamination par les légionelles est envisageable.

Actuellement, il convient de procéder à un contrôle régulier des installations en prévoyant des points de piquage dans les conduites ou dans les réacteurs où circulent les fluides qui sont susceptibles de provoquer un encrassement.

Ces points de piquage permettent également de prélever des échantillons, puis de les analyser en laboratoire afin d'obtenir soit une mesure de l'encrassement soit une analyse du type d'encrassement formé (nature, composition...).

Sur certains sites industriels on utilise, pour mesurer l'épaisseur de la couche d'encrassement formée à l'intérieur des parois d'une conduite ou d'un réacteur, des méthodes faisant intervenir une mesure de la perte de charge qui se produit entre deux points espacés dans le sens de l'écoulement du fluide. On peut également utiliser des méthodes mesurant les différences de température entre ces points.

Ces dernières mesures présentent toutefois de réels inconvénients dans la mesure où :

- elles ne permettent pas d'obtenir une information locale,
- elles manquent de réactivité mais également de sensibilité et d'étendue de la gamme de mesure.

On connaît d'après le document FR 2 885 694 une méthode de mesure de l'encrassement dans un réacteur ou une conduite qui utilise deux sondes de température.

Plus particulièrement, ces deux sondes sont introduites dans une conduite respectivement grâce à deux points de piquage et l'une de ces sondes mesure la température du fluide, tandis que l'autre sonde mesure la température en paroi d'un générateur de chaleur.

Selon cette méthode, on s'arrange en premier lieu pour obtenir une différence de température entre la température de paroi et la température du fluide aussi proche de zéro que possible. Ensuite, le générateur de chaleur émet un flux thermique tandis que l'on mesure au cours du temps l'écart de température entre la température de paroi et celle du fluide, l'état d'encrassement du réacteur étant déterminé à partir de la mesure de cet écart de température.

Cette méthode et le système associé présentent toutefois certains inconvénients limitant leur utilisation en milieu industriel.

En particulier, la présence de deux points de piquage physique sur une conduite ou un réacteur représente toujours pour un industriel une contrainte d'installation assortie d'un coût non négligeable.

En outre, deux sondes de température, même si elles sont du même type, présentent toujours une certaine dérive de fonctionnement l'une par rapport à l'autre en raison par exemple de dispersions qui interviennent lors de la fabrication.

Du fait de ces dérives, les deux sondes n'ont pas le même comportement l'une par rapport à l'autre vis-à-vis d'une même température du milieu dans lequel elles sont plongées.

De plus, la sonde de température qui sert de référence (celle qui mesure la température du fluide) peut elle-même s'encrasser, ce qui introduit une dérive supplémentaire par rapport à l'autre sonde de température.

En raison, également, des différences de cinétique (ou dynamique) de réponses entre les deux sondes de température, on peut alors constater un écart de température entre les deux sondes alors que, théoriquement, un tel écart de température ne devrait pas se produire.

Ensuite, la méthode utilisée dans le document précité impose toute absence de variation de la température du fluide dans lequel sont plongés les deux éléments de mesure de température séparés. Or, cela réduit grandement le champ d'applications dans la mesure où la plupart des procédés industriels et/ou des procédés de traitement de l'eau modifient et perturbent sans cesse la température moyenne du milieu.

Enfin, la méthode utilisée, en imposant des conditions initiales, nécessite à la fois un traitement a posteriori des informations enregistrées ainsi qu'une vérification systématique des conditions avant toute utilisation. Cela rend donc cette méthode inutilisable pour des applications en continu ou pour un fonctionnement à long terme (24h/24). Au mieux, l'accès à l'écart de température (dérive thermique) est observable sur la période de mesure envisagée et programmée.

Les inconvénients qui viennent d'être cités peuvent ainsi conduire à des mesures erronées de l'encrassement et donc à un manque de fiabilité de la méthode utilisée. En outre, en raison du mode opératoire et des éléments constitutifs du dispositif physique le nombre d'applications possibles est restreint.

Il serait donc intéressant de pouvoir disposer d'un système de détermination d'encrassement de conception simplifiée et qui fournisse des mesures fiables dans le temps.

Le document EP 1 878 501 concerne un instrument pour chauffer et refroidir de manière contrôlée un objet tel qu'un liquide. Cet instrument comprend notamment une couche chauffante, un substrat conducteur et un capteur de température.

Le document FR 2 897 930 concerne un échangeur thermique à plaques incluant un dispositif d'évaluation de son état d'encrassement. Ce dispositif comprend une résistance électrique et plusieurs thermocouples permettant de mesurer la température à proximité directe de la résistance.

Le document FR 2 788 600 concerne un procédé de détection d'un dépôt de matière sur une face d'un capteur de flux thermique. Ce procédé est mis en oeuvre dans un dispositif comprenant un élément chauffant et deux thermocouples dont l'un est situé dans le fluide au contact duquel se trouve le dispositif.

Le document FR 2 493 523 concerne un procédé et appareil en vue de soumettre des fluides à des essais en vue de l'encrassement et un protocole de préservation.

La présente invention a ainsi pour objet un capteur de mesure et/ou de détection d'un encrassement se formant sur une face du capteur, caractérisé en ce qu'il comporte :

- un support servant d'isolant thermique,
- au moins un élément chauffant disposé d'un côté sur le support et qui est apte à diffuser, sur commande, un flux thermique homogène contrôlé du côté opposé au support,
- un unique élément de mesure de température ayant des dimensions inférieures à celles dudit au moins un élément chauffant et étant positionné au-dessus et au centre de celui-ci, du côté opposé au support afin d'être dans la partie du flux thermique la plus homogène.

L'élément de mesure de température possède des dimensions suffisamment petites par rapport à celles de l'élément chauffant pour que, lorsqu'il est positionné de façon superposée au centre de l'élément chauffant, il soit dans la partie du flux thermique la plus homogène possible (coeur du flux) et le plus loin possible des bords de l'élément chauffant afin de pouvoir s'affranchir des effets de bord. Ainsi, les formules physiques connues reliant l'épaisseur d'une couche d'encrassement à l'écart de température occasionné par cette couche pour différentes configurations de capteur (configuration plane ou cylindrique) peuvent être appliquées.

On notera que le support d'isolation thermique canalise le flux thermique généré par le ou les éléments chauffants dans une direction qui s'éloigne du support. Le flux diffusé est ainsi canalisé vers l'élément de mesure de température.

Le transfert thermique est ainsi optimisé de même que l'efficacité de fonctionnement du capteur.

Compte tenu de l'agencement spécifique du capteur la température de surface mesurée par ce dernier est très fiable et obtenue très rapidement, que l'élément de mesure de température soit directement en contact avec le milieu de mesure (fluide) ou indirectement via une interface de protection. La mesure de température est locale et non globale en raison des petites dimensions de l'élément de mesure.

On notera qu'un tel capteur offre une plus grande réactivité lorsque l'élément de mesure de température est directement au contact du fluide puisqu'il n'y a pas de résistance thermique due à l'interface entre l'élément de mesure de température et le fluide.

Le capteur est ainsi plus rapide et plus sensible qu'en présence de l'interface.

Par ailleurs, ce capteur peut même fonctionner lorsque le fluide est au repos compte tenu de la sensibilité accrue du capteur.

En outre, le ou les éléments chauffants, par exemple plans, dissipent une puissance thermique très faible afin de ne pas chauffer le fluide, car cela risquerait de perturber les mesures de température qui seraient alors moins représentatives du seul phénomène d'encrassement.

Toutefois, la puissance thermique doit être suffisamment significative afin que l'élément de mesure de température puisse délivrer un signal utile.

On notera que ce capteur fonctionne avec un seul élément de mesure de température.

Par ailleurs, le capteur selon l'invention est apte à fournir des mesures en continu et en temps réel, quelles que soient les évolutions des conditions du milieu de mesure (température du fluide non maîtrisée).

Selon une caractéristique, l'élément de mesure de température est miniaturisé par rapport audit au moins un élément chauffant.

Cette miniaturisation garantit la précision de mesure et la réactivité du capteur.

Selon une caractéristique, l'élément de mesure de température possède une surface dont la taille est sensiblement inférieure (au moins 100 fois plus petite) à celle de la surface dudit au moins un élément chauffant.

Ce rapport de dimensions relatives garantit la fiabilité, la sensibilité et la réactivité du capteur. Le rapport surfacique peut être inférieur à 1 %.

On notera que la taille de la surface qui compte dans l'élément chauffant est celle de la zone active (zone de chauffe) et non la taille totale incluant celle de la zone non active (zone non chauffante, par exemple zone périphérique).

Selon une caractéristique, ledit au moins un élément chauffant est apte à générer une densité de puissance thermique comprise entre 1 et 4 mW/mm$^2$.

Comme déjà brièvement exposé, une telle puissance de chauffe permet de générer un flux thermique suffisant pour être détecté par l'élément de mesure de température (et pour qu'il puisse mesurer localement la température de l'endroit où il se trouve), sans toutefois être trop élevé afin de ne pas perturber le fluide.

Selon une caractéristique, le capteur comporte au moins un élément d'interface conducteur thermique ayant deux faces opposées, l'une des faces, dite intérieure, étant disposée contre l'élément de mesure de température. L'autre face, dite extérieure, est destinée à être en contact avec le milieu fluide de mesure.

Un tel élément d'interface protège l'élément de mesure de température, ainsi que le reste du capteur et est choisi (matériau et épaisseur) afin d'offrir une résistance thermique aussi faible que possible.

En adaptant ledit au moins un élément d'interface, ou au moins sa face extérieure, en fonction de l'environnement dans lequel va être placé le capteur, on s'assure que ce dernier va se comporter comme un élément faisant partie de cet environnement et non comme un corps étranger.

En particulier, en reproduisant au moins sur la face extérieure de l'élément d'interface l'état de surface de la paroi du contenant dans lequel le capteur est destiné à être installé, la formation d'un éventuel encrassement sur cette face extérieure sera très fortement représentative du phénomène d'encrassement sur la paroi du contenant.

Ainsi, l'état de surface de la face extérieure de l'élément d'interface dépend de l'état de surface interne de la paroi ou des parois du contenant, état de surface qui dépend des applications envisagées.

A titre d'exemple, l'élément d'interface peut être en acier inoxydable par exemple de classe 316L si le fluide circule dans une conduite en acier inoxydable 316L ou bien en polychlorure de vinyle (PVC) si le fluide circule dans une conduite en PVC.

Un capteur ou au moins l'élément d'interface d'un capteur est ainsi dédié à une application donnée et, au moins, à une situation donnée.

En outre, la présence de cet élément d'interface en contact avec le fluide, en écoulement ou non, protège le capteur, au moins mécaniquement, voire également chimiquement, et le rend robuste aux agressions extérieures, notamment venant du fluide.

Selon une caractéristique, au moins la face extérieure dudit au moins un élément d'interface est dans un matériau de même nature (par exemple identique) que celui de la paroi du contenant qui est en contact avec le fluide.

Selon une caractéristique, la face extérieure dudit au moins un élément d'interface possède une rugosité équivalente (par exemple identique) à celle de la paroi du contenant qui est en contact avec le fluide.

Cette adaptation permet d'affiner la ressemblance entre l'élément d'interface, ou du moins sa face extérieure, et la paroi du contenant.

Selon une caractéristique, ledit au moins un élément d'interface présente(entre ses deux faces opposées) une résistance thermique inférieure ou égale à 4°C/W.

Cette caractéristique de l'élément d'interface permet de s'assurer que le flux thermique généré sera bien diffusé jusqu'à la face extérieure et évacué par le fluide, sans rencontrer une forte résistance thermique qui risquerait de provoquer une élévation de température nuisible au bon fonctionnement du capteur. En outre, ceci rend le capteur plus sensible, plus réactif et plus fiable.

On notera que l'épaisseur du matériau d'interface est ainsi adaptée en fonction du matériau lui-même, compte tenu de la résistance thermique à ne pas dépasser.

Selon une caractéristique, le capteur présente une forme générale allongée selon une direction longitudinale, ledit au moins un élément chauffant, l'élément de mesure de température, et ledit au moins un élément d'interface lorsqu'il est présent, étant alignés l'un derrière l'autre suivant la direction longitudinale du capteur.

Dans cette configuration le capteur est destiné à être monté de façon affleurante dans la paroi du contenant en contact avec le fluide. Ainsi agencé, il ne perturbe pas le fluide et, donc, l'écoulement quand le fluide est en écoulement.

Selon une caractéristique, le capteur présente une forme générale allongée selon une direction longitudinale, ledit au moins un élément chauffant, l'élément de mesure de température, et ledit au moins un élément d'interface lorsqu'il est présent, étant alignés l'un derrière l'autre suivant une direction perpendiculaire à la direction longitudinale du capteur.

Dans cette configuration le capteur est destiné à être monté de façon intrusive dans le fluide, par exemple à partir de la paroi du contenant en contact avec le fluide.

On notera que des moyens de fourniture d'énergie aux différents éléments fonctionnels du capteur et des moyens de traitement des données fournies par ces éléments, sont adjoints au capteur pour lui permettre de remplir sa fonction de mesure et/ou de détection. Des moyens additionnels d'affichage de résultats (courbes de température, d'encrassement...) et/ou des moyens de transmission à distance de ces résultats et/ou d'informations qualitatives (présence ou absence d'une couche d'encrassement...) peuvent être prévus.

L'invention prévoit d'utiliser le capteur brièvement exposé ci-dessus pour mesurer ou détecter l'encrassement formé (ou en cours de formation) sur le capteur qui est installé dans une paroi d'un contenant (exemple : canalisation industrielle ou réacteur industriel) renfermant un fluide.

Plus généralement, l'encrassement se forme sur la face extérieure du capteur qui est exposée au fluide.

Cette face est soit la face dudit au moins un élément chauffant portant l'élément de mesure de température en l'absence d'interface, soit la face extérieure dudit au moins un élément d'interface.

Ainsi, le capteur mesure la température pariétale locale et détermine l'écart de température quand une faible puissance électrique est appliquée audit au moins un élément chauffant.

A partir de cet écart de température on détermine en continu et en temps réel (aucune comparaison avec des mesures de référence préenregistrées n'est nécessaire) l'épaisseur de l'encrassement se formant de manière naturelle (c'est-à-dire non provoquée, par exemple par chauffage du fluide) sur la face extérieure du capteur.

Le procédé envisagé permet ainsi, à partir d'un seul élément de mesure de température, là où l'art antérieur nécessitait deux éléments de mesure, de déterminer de façon plus fiable que dans l'art antérieur l'encrassement formé sur la face extérieure du capteur.

Plus particulièrement, le procédé permet de mesurer localement l'épaisseur d'encrassement qui est représentative d'un écart de température significatif ou, selon les applications, de détecter (de façon indicative) qu'un encrassement est en cours de formation (fonction de surveillance et d'alerte).

L'invention a pour objet un système de mesure ou de détection d'un encrassement formé sur une face du capteur qui est exposée à un fluide, comprenant :

- des moyens de détermination d'un écart de température entre, d'une part, la température pariétale mesurée par l'élément de mesure de température lorsque ledit au moins un élément chauffant diffuse un flux thermique et, d'autre part, la température du fluide,
- des moyens de calcul de l'épaisseur de l'encrassement formé sur la face du capteur exposée au fluide à partir de l'écart de température déterminé.

L'invention a également pour objet un procédé de mesure ou de détection de l'encrassement formé sur le capteur brièvement exposé ci-dessus lorsque celui-ci est installé dans la paroi du contenant mentionné plus haut.

L'invention a ainsi pour objet un procédé qui comprend les étapes suivantes :

- détermination d'un écart de température entre, d'une part, la température pariétale mesurée par l'élément de mesure de température lorsque ledit au moins un élément chauffant diffuse un flux thermique, et d'autre part, la température du fluide,
- calcul de l'épaisseur de l'encrassement formé sur la face du capteur exposée au fluide à partir de l'écart de température déterminé.

L'invention a plus particulièrement pour objet un procédé dans lequel la détermination d'un écart de température comprend les étapes suivantes :

- alternance de phases de commande de la diffusion d'une puissance thermique par ledit au moins un élément chauffant et de non diffusion d'une puissance thermique,

- mesure en permanence durant chacune des phases précitées de la température pariétale par l'élément de mesure de température,
- détermination d'un écart de température entre les températures mesurées par l'élément de mesure de température.

Ainsi, la mesure ou détection d'encrassement est effectuée en déterminant l'écart de température fourni par l'élément de mesure de température pariétale quand ledit au moins un élément chauffant génère un flux thermique et quand il n'en génère pas.

On notera que lorsqu'un flux thermique n'est pas généré, le capteur qui est particulièrement sensible et réactif mesure la température du fluide.

Toutefois, d'autres méthodes peuvent être envisagées pour connaître la température du fluide (par exemple, cette température peut être constante en raison du processus industriel).

A titre d'exemple, en l'absence d'encrassement sur la face extérieure du capteur exposée au fluide, l'écart de température est inférieur à 0,1 °C, alors qu'il peut atteindre 2 à 3 °C en présence d'un fort encrassement.

Selon une caractéristique, ledit au moins un élément chauffant est commandé pour diffuser une densité de puissance thermique comprise entre 1 et 4 mW/mm$^2$.

Cette puissance limitée procure les mêmes avantages que ceux décrits plus haut.

Selon une caractéristique, l'étape de commande de la diffusion d'un flux thermique par ledit au moins un élément chauffant comprend une étape de génération d'un signal de modulation de puissance dudit au moins un élément.

Selon une caractéristique, le signal est alternatif.

Selon une caractéristique, le signal alternatif est stationnaire.

Selon une caractéristique, le signal alternatif stationnaire est en créneaux.

D'autres caractéristiques apparaitront au cours de la description qui va suivre, donnée uniquement à titre d'exemple non limitatif et faite en référence aux dessins annexés, sur lesquels :

- la figure 1 est une vue schématique générale d'un capteur selon un premier mode de réalisation de l'invention ;
- la figure 2 est une vue schématique générale d'un capteur selon un exemple utile à la compréhension de l'invention ;
- les figures 3 et 4 illustrent les mesures de température relevées par un capteur selon l'invention, respectivement en présence et en l'absence d'encrassement en relation avec un signal d'alimentation S ;
- les figures 5a et 5b illustrent de façon plus détaillée le capteur 10 de la figure 1;
- les figures 6a et 6b illustrent de façon plus détaillée le capteur 34 de la figure 2 ;
- la figure 7 illustre de façon schématique l'évolution d'une courbe d'encrassement au cours du temps dans un réacteur de refroidissement industriel.

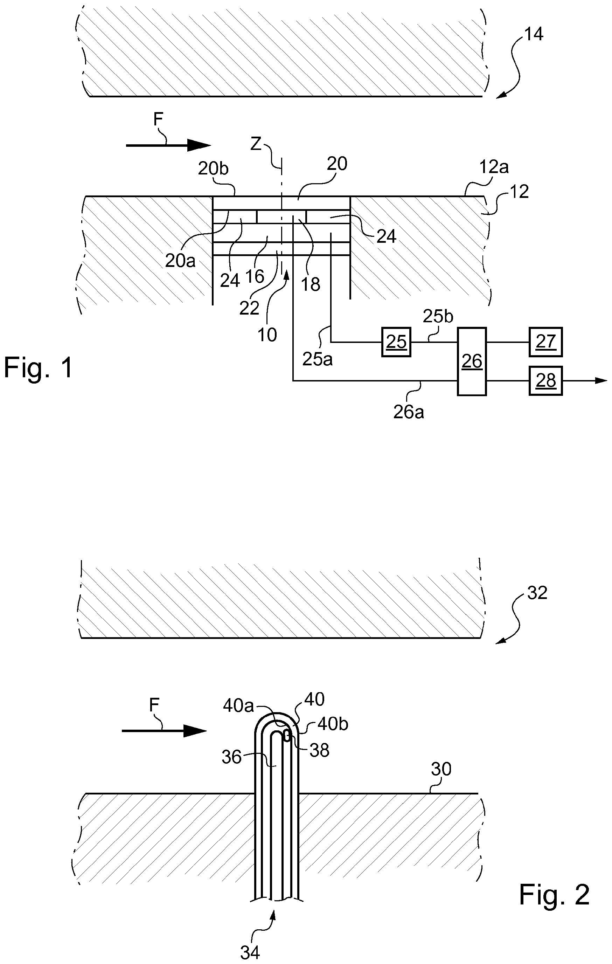

Comme représenté sur la figure 1 un capteur 10 est installé dans une paroi 12 d'un contenant 14 qui est par exemple une conduite dans laquelle circule un fluide dont l'écoulement est symbolisé par la flèche repérée par la référence F. Ce capteur est représenté ici de façon schématique et un exemple plus détaillé sera décrit ultérieurement.

On notera que le contenant 14 renfermant un fluide peut être d'un autre type qu'une conduite, et, par exemple, être un réacteur chimique, voire un contenant d'un autre type tel qu'une cuve....

On notera en outre que le fluide présent dans le contenant n'est pas nécessairement en écoulement et peut être stagnant.

Le capteur 10 est monté dans l'une des parois du contenant, de façon à affleurer la face interne 12a de celle-ci, et comporte plusieurs éléments fonctionnels qui vont être décrits ci-après.

Le capteur 10 comprend plus particulièrement un ou plusieurs éléments chauffants dont un seul 16 est représenté ici.

Ce ou ces éléments chauffants sont aptes à diffuser un flux thermique homogène contrôlé lorsqu'ils sont commandés de façon appropriée par des moyens non représentés sur cette figure, mais qui seront décrits ultérieurement.

Le capteur comporte également un élément de mesure de température 18, placé au-dessus de l'élément chauffant 16 sur la figure 1 par exemple contre la surface supérieure de ce dernier, afin d'être localisé dans le flux thermique homogène diffusé par lui.

L'élément de mesure de température 18 est positionné au centre de l'élément chauffant 16 afin d'être au coeur de la partie du flux thermique la plus homogène.

Cet élément de mesure de température 18 est dans un rapport de surface d'au moins 1 à 100 avec l'élément chauffant 16 (plus précisément avec la zone active de l'élément chauffant), c'est-à-dire que la taille de l'élément 18 est au moins 100 fois plus petite que celle de l'élément 16.

La figure 1 ne reproduit pas ces proportions relatives pour des raisons d'échelle et de lisibilité.

L'élément de mensure de température 18 miniaturisé est ainsi placé dans un flux thermique homogène généré par l'élément chauffant.

La densité de puissance thermique générée est comprise entre 1 et 4 mW/mm$^2$ ce qui est suffisant pour que l'élément de mesure 18 puisse mesurer une température et suffisamment faible pour ne pas influencer le milieu de mesure (fluide).

Il faut en effet éviter de chauffer le milieu pour, par exemple, éviter de provoquer un encrassement non naturel sur le capteur.

Il convient de noter que le capteur selon l'invention ne comporte qu'un seul élément de mesure de température.

La température du fluide, et plus généralement du process industriel faisant intervenir le contenant n'est généralement pas connue.

Cela n'a pour autant aucune incidence sur le procédé de mesure de détection de l'encrassement formé à l'intérieur du contenant comme on le verra par la suite.

Le procédé permet de s'affranchir d'éventuelles variations de cette température au cours du temps.

Le capteur comporte en outre dans cet exemple au moins un élément d'interface 20 qui est placé au-dessus de l'élément de mesure 18, par exemple au contact de celui-ci et qui est monté affleurant par rapport à la paroi 12.

Plus particulièrement, l'élément d'interface 20 comporte deux faces opposées 20a et 20b, l'une 20a étant dite « intérieure » et étant disposée contre la face supérieure de l'élément de mesure 18 et l'autre 20b, dite « extérieure » étant destinée à être en contact avec le fluide.

Les faces 20b et 12a sont disposées à la même côte afin de ne pas introduire de perturbation dans l'écoulement.

L'élément d'interface 20 est adapté pour que sa face extérieure soit représentative de l'état de surface de la paroi 12 du contenant afin que le dépôt d'une couche d'encrassement sur la face 20b du capteur soit réalisé de façon quasi identique au dépôt d'une couche d'encrassement sur la face interne 12a de la paroi du contenant.

Ainsi, la détermination de l'encrassement formé sur la face 20b du capteur, détermination qui correspond soit à une mesure d'encrassement soit à une détection d'encrassement, sera particulièrement fiable compte-tenu de la nature de cette face extérieure 20b.

Afin que la face extérieure 20b soit représentative de l'état de surface de la paroi du contenant, il est préférable que cette face possède une rugosité identique à celle de la paroi.

Ainsi, par exemple dans le cadre d'une application agro-alimentaire, la paroi 12 de la conduite peut être en acier inoxydable, par exemple un inox de classe 316L et la face 20b du capteur sera particulièrement bien polie tout comme la face 12a de la conduite afin d'atteindre des valeurs de rugosité (Ra) de l'ordre de 0,8 $\mu$m.

De préférence, la face extérieure 20b est réalisée dans un matériau de même nature que celui de la paroi du contenant. Si ce matériau n'est pas identique, il doit au moins être d'une nature compatible avec celle du matériau constitutif de la paroi.

La solution la plus simple est que l'élément d'interface 20 soit réalisé dans un matériau identique à celui de la paroi du contenant.

On notera que l'élément d'interface présente une résistance thermique inférieure ou égale à 4°C/W afin de conférer au capteur une bonne sensibilité et un rapport signal sur bruit élevé.

Compte tenu de cette caractérisation de l'élément d'interface on sélectionne un matériau d'interface et une épaisseur (dimension entre les faces opposées 20a et 20b) adaptés.

On peut ainsi par exemple utiliser un matériau d'interface en inox 316 L de moins de 300 $\mu$m d'épaisseur.

Le capteur 10 peut également comporter un ou plusieurs éléments d'isolation thermique 22 placés dans la partie arrière du capteur, c'est-à-dire à l'opposé de la partie où se trouve l'élément d'interface 20 en contact avec le fluide.

Ce ou ces éléments d'isolation thermique 22 contribuent à canaliser le flux thermique diffusé par ledit au moins un élément chauffant 16 vers l'élément de mesure 18 et vers l'élément d'interface 20 placé derrière ce dernier.

Ce ou ces éléments servent également de support protégeant le capteur.

En outre un ou plusieurs éléments d'isolation thermique peuvent être agencés autour du capteur, entre ce dernier et la paroi du contenant dans laquelle il est installé, afin de mieux canaliser le flux thermique diffusé.

On notera par ailleurs que le capteur 10 comporte, de façon adjacente à l'élément de mesure 18 et interposés entre ledit au moins un élément chauffant 16 et l'élément d'interface 20, un ou plusieurs éléments conducteurs thermiques 24 qui favorisent la transmission du flux thermique homogène généré par ledit au moins un élément chauffant 16 en vue de le transmettre à l'élément d'interface 20.

Dans l'exemple représenté sur la figure 1 le capteur a une symétrie de révolution cylindrique et l'élément 24 a par exemple une forme annulaire entourant l'élément de mesure 18.

On notera que le capteur 10 présente une forme générale allongée suivant une direction longitudinale qui correspond à celle de son axe de révolution Z et les différents éléments fonctionnels précités, à savoir le ou les éléments chauffants, l'élément de mesure et ledit au moins un élément d'interface sont alignés l'un derrière l'autre (ou l'un au-dessus de l'autre) suivant cette direction.

Un dispositif électronique 25 est relié à l'élément chauffant 16 par des moyens de connexion 25a, d'une part, et à une unité de traitement de données ou calculateur 26 (incluant par exemple un microprocesseur et des mémoires) par des moyens de connexion 25b, d'autre part. Le dispositif 25 a pour fonction de fournir de l'énergie électrique à l'élément chauffant. Il peut s'agir, par exemple, d'un générateur de courant qui est capable d'injecter la puissance électrique nécessaire sur commande.

L'unité de traitement 26 recueille les différentes données provenant du dispositif 25 (puissance induite dans l'élément de chauffe 16) et de l'élément de mesure de température 18 (température pariétale détectée par cet élément) via des moyens de connexion 26a.

Cette unité 26 échantillonne et traduit en grandeurs physiques (température, ...) les mesures et informations provenant du capteur, ainsi que la puissance générée. On notera que le système de détermination d'encrassement formé des éléments 25, 25a-b, 26 et 26a comprend des moyens (unité 26) de détermination d'un écart de température entre les températures mesurées par l'élément de mesure et des moyens de calcul (unité 26) de l'épaisseur de l'encrassement formé à la surface du capteur à partir de cet écart de température ainsi déterminé et des formules physiques de géométrie de capteur connue.

Plus particulièrement, les moyens de détermination déterminent un écart de température entre, d'une part, la température pariétale mesurée par l'élément de mesure de température lorsque l'élément chauffant dissipe un flux thermique et, d'autre part, la température du fluide. Le système comprend en outre, de façon optionnelle, un afficheur 27 et/ou des moyens 28 de transmission d'informations à distance. L'afficheur 27 permet, par exemple, d'afficher en continu, les valeurs de température (mesurée) et d'encrassement (calculée) comme on le verra plus loin. Les moyens 28 (exemple : transmetteur) permettent d'envoyer à distance les données mesurées et/ou traitées par l'unité 26 et/ou une information d'alerte et/ou une autre information relative au capteur et/ou à son état de fonctionnement. On peut considérer aussi une variante de réalisation du capteur représenté à la figure 1 dans laquelle l'élément d'interface 20 est absent.

Toutes les caractéristiques et avantages particuliers décrits en relation avec le capteur 10 de la figure 1 à l'exception de ceux concernant l'élément d'interface 20, restent valable ici et ne seront pas répétés. Ce capteur procure une sensibilité supérieure à celle du capteur de la figure 1 puisque l'élément de mesure de température pariétale 18 est directement au contact du fluide et qu'aucune résistance thermique n'est interposée entre le fluide et l'élément de mesure en l'absence d'encrassement.

La face du capteur ainsi exposée au fluide est celle portant l'élément de mesure de température.

Compte tenu de cette sensibilité accrue, ce capteur peut être utilisé de façon avantageuse lorsque le fluide est au repos.

La figure 2 illustre un autre capteur et son installation dans une paroi 30 d'un contenant 32.

Le capteur 34 illustré à la figure 2 est monté de façon intrusive dans l'écoulement de fluide repéré par la flèche F et fait ainsi saillie par rapport à la paroi 30.

Ce capteur présente une forme générale allongée selon une direction longitudinale et présente, par exemple, une forme sensiblement cylindrique, au moins dans sa partie placée dans l'écoulement.

Plus particulièrement, le capteur 34 comprend des éléments fonctionnels décrits en relation avec la figure 1 à savoir au moins un élément chauffant 36, un élément de mesure de température 38 et au moins un élément d'interface 40.

L'élément de mesure de température 38 est placé à la surface de l'élément chauffant 36 dans le flux thermique diffusé par ce dernier.

L'élément d'interface 40 possède deux faces opposées, une face 40a, appelée face intérieure, et une face opposée 40b, appelée face extérieure.

La face intérieure est en contact avec l'élément de mesure 38, tandis que la face extérieure est en contact avec le fluide.

Comme pour la face 20b du capteur 10 de la figure 1 la face extérieure 40b est représentative de l'état de surface de la paroi 30 du contenant pour les mêmes raisons.

Par souci de simplicité, l'élément d'interface 40 est réalisé dans un matériau de même nature que celui de la paroi 30, voire identique à ce dernier.

Les caractéristiques décrites pour le capteur 10 de la figure 1 peuvent également être reprises pour le capteur 34, notamment en termes de rugosité de la face extérieure de l'élément d'interface, de l'épaisseur de cet élément d'interface par rapport à la puissance thermique générée par l'élément chauffant ainsi que de la canalisation du flux thermique par un ou plusieurs éléments d'isolation thermique non représentés sur la figure 2.

Les mêmes éléments fonctionnels 25, 25a-b, 26 et 26a, 27 et 28 qui sont représentés sur la figure 1 peuvent également être repris ici pour permettre au capteur 34 de fonctionner.

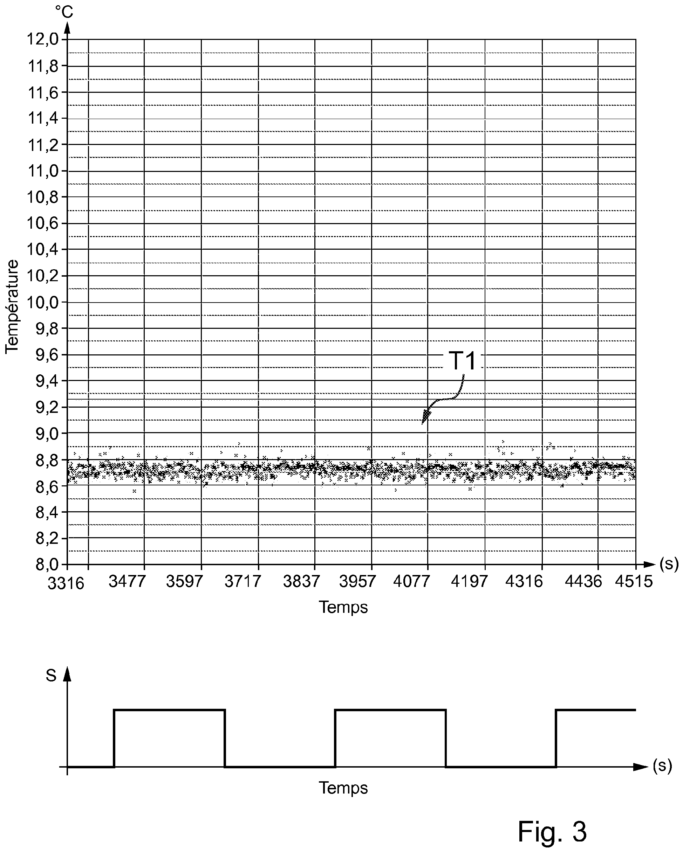

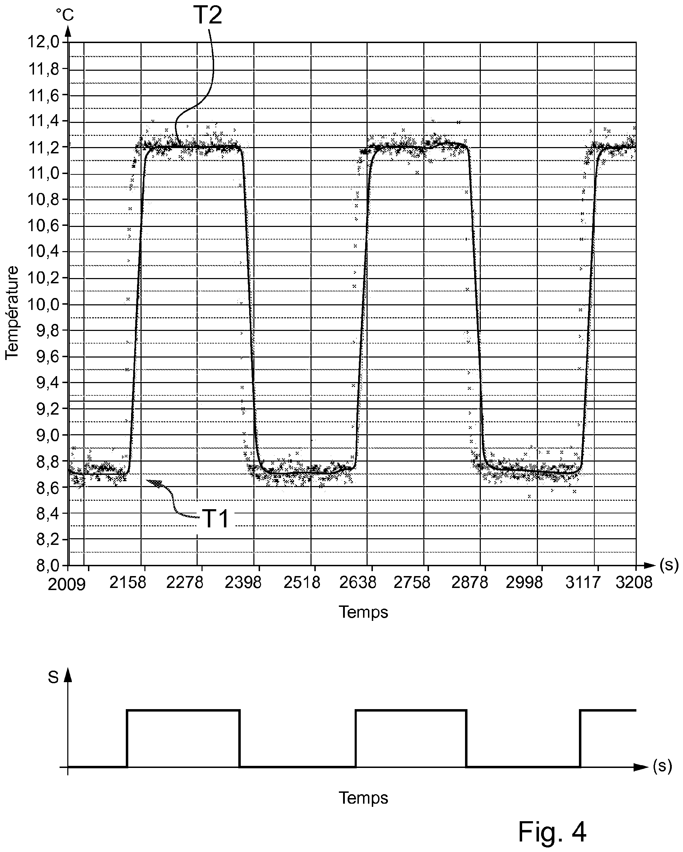

On va maintenant décrire en référence aux figures 3 et 4 le procédé selon un premier mode de réalisation de l'invention.

Ce procédé permet de mesurer et/ou de détecter l'encrassement qui se forme sur la face extérieure de l'élément d'interface du capteur (face 20b du capteur 10, face portant l'élément de mesure 18 du capteur 11 et face 40b du capteur 34).

On entend par « encrassement » tout dépôt adhérent se formant à la surface de l'élément considéré à partir de corps qui sont dans le fluide de manière temporaire ou permanente (encrassement de nature organique, tel un biofilm, ou inorganique, tel un entartrage).

On notera que le procédé selon l'invention permet d'effectuer la mesure et/ou la détection d'encrassement sur site, en ligne et en continu, et quasiment en temps réel.

Il n'est donc pas nécessaire d'effectuer de prélèvement sur site et d'analyse ultérieure des échantillons prélevés aux fins de mesure et/ou de détection d'encrassement.

Le procédé selon un premier mode de réalisation de l'invention prévoit d'alterner des phases de commande de diffusion d'un flux thermique par le ou les éléments chauffants du capteur et de non diffusion d'un flux thermique sur une durée donnée.

Par ailleurs, le procédé prévoit pendant cette durée de mesurer en continu la température de surface de l'élément d'interface au contact du milieu de mesure grâce à l'élément de mesure de température (ou seulement la température locale de l'endroit où est positionné l'élément de mesure de température en l'absence d'élément d'interface).

On peut par exemple effectuer cette alternance de phases de chauffe et de non chauffe du capteur tout au long du déroulement d'un process industriel, ou seulement lors de certaines étapes de celui-ci.

La fonction de mesure d'encrassement permet de connaître à tout instant l'épaisseur de la couche d'encrassement formée à la surface du capteur et qui reproduit de manière très fiable, l'encrassement formé sur la surface intérieure du contenant dans lequel est installé le capteur.

Par ailleurs, lorsque le capteur est utilisé pour remplir une fonction de détection, il peut être utilisé pour déclencher un signal d'alarme en cas de détection d'une couche d'encrassement en formation.

Comme déjà exposé ci-dessus, le dispositif 25 génère une puissance électrique qui est transmise à l'élément chauffant, par exemple sous la forme d'un signal de modulation de puissance qui est, par exemple, de type alternatif.

Ce signal est de préférence stationnaire, c'est-à-dire qu'il définit des états stables parfaitement déterminés durant lesquels soit une puissance électrique déterminée est fournie à l'élément chauffant, soit aucune puissance n'est fournie à cet élément.

La figure 3 illustre un signal alternatif stationnaire réalisé sous la forme de créneaux.

Plus particulièrement, la figure 3 illustre, d'une part, en partie basse le signal de puissance en forme de créneaux S qui est appliqué à l'élément chauffant et, d'autre part, en partie haute, la température mesurée par l'élément de mesure durant chacune des phases de chauffe et de non chauffe.

Les différentes mesures de températures montrent que celles-ci restent sensiblement constantes (autour d'une valeur $T_1$), ce qui traduit un état non encrassé du capteur et donc de la paroi interne du contenant.

La température $T_1$ correspond à la température du milieu fluide.

Le milieu dans lequel sont effectuées ces mesures est un milieu agité puisque le fluide est en écoulement, ce qui permet d'évacuer la chaleur dégagée à la face extérieure de l'élément d'interface par un phénomène de convection.

Lorsque l'état de surface est propre, le flux thermique produit par l'élément chauffant est transféré à l'élément de mesure et à l'élément d'interface, puis diffusé dans le milieu de mesure et la température mesurée par l'élément de mesure reste, dans certains cas, constante et égale à la température du milieu. Sinon, dans les autres cas, si l'élément d'interface génère une barrière à la diffusion thermique et/ou si l'agitation du milieu est insuffisante, une différence de température apparaît. Cette différence de température sera prise en compte, ensuite, dans les calculs pour déterminer la valeur de l'encrassement.

Lorsqu'un encrassement se forme sur la face extérieure du capteur et donc sur la face interne de la paroi du contenant, le flux thermique généré par l'élément chauffant va provoquer une élévation de température au niveau de l'élément d'interface. En effet, la couche d'encrassement en cours de formation agit comme un isolant thermique qui réduit ainsi les échanges thermiques avec le milieu de mesure et donc la dissipation du flux.

Ce phénomène se traduit sur la figure 4 par l'apparition de paliers d'augmentation de température correspondant aux parties du signal S en créneaux où une puissance est injectée à l'élément chauffant.

L'écart de température entre la température mesurée sur le palier ($T_2$) et la température mesurée en l'absence d'encrassement ($T_1$) est représentatif de l'encrassement formé à l'instant correspondant aux mesures effectuées et, plus particulièrement de l'épaisseur de la couche d'encrassement.

Cette épaisseur est obtenue par des formules bien connues de l'homme de l'art et qui dépendent de la configuration géométrique du capteur, à savoir une géométrie plane pour le capteur 10 de la figure 1 le capteur 10 sans élément d'interface 20 ou une géométrie cylindrique pour le capteur 34 de la figure 2.

Plus généralement, l'épaisseur de la couche d'encrassement est donnée par l'équation suivante pour la configuration telle que représentée sur la Figure 1a et la Figure 1b :

$$\frac{P}{2.\pi.L.h(r+e)} + \frac{P}{2.\pi.L.\lambda}.\ln\left(1+\frac{e}{r}\right) + T_1 - T_2 = 0$$

et par la formule suivante pour la configuration telle que représentée dans la Figure 2 :

$$\frac{P}{2.D^2.h} + \frac{P.e}{2.\lambda} + T_1 - T_2 = 0$$

où :

P désigne, en W, la puissance électrique fournie à l'élément chauffant,

h désigne, en $W/m^2/K$ le coefficient de transfert thermique convectif,

T1 et T2, en K, désignent respectivement la température mesurée en phase de non-chauffe et la température mesurée en phase de chauffe,

L, r, D désignent, en m, les paramètres géométriques de l'élément chauffant utilisé (L pour longueur, r pour rayon, D pour diamètre),

λ désigne, en W/m/K, le coefficient de conductivité thermique de la couche d'encrassement se déposant sur la surface du capteur,

et enfin, e, désigne, en m, l'épaisseur de la couche d'encrassement qui se dépose sur la surface du capteur.

On notera que plus l'épaisseur du dépôt formé à la surface du capteur augmente, plus l'élévation de température sera importante pour une puissance donnée.

En pratique, le procédé prévoit d'imposer une consigne de chauffe en puissance (exemple : 100 mW) en imposant un courant électrique dont l'intensité peut varier de 5 à 100 mA, de déterminer l'écart de température qui en résulte (augmentation), puis de calculer l'épaisseur de la couche d'encrassement.

Il convient de noter que l'on peut être amené à effectuer une compensation en courant en fonction d'éventuelles variations de la température du fluide.

On notera que la durée de la période de chauffe, varie de plusieurs secondes à plusieurs minutes, comme représenté sur les figures 3 et 4 et que le temps écoulé est exprimé en secondes.

La durée de la période de chauffe n'est pas nécessairement égale à la durée de non chauffe mais, pour des raisons pratiques de mise en oeuvre de l'invention, des périodes temporelles égales de chauffe et de non-chauffe seront préférées. De plus, la durée de la période de chauffe et/ou de non chauffe peut varier au cours du temps afin de s'adapter dynamiquement aux conditions opératoires du processus industriel mais, en pratique, une durée optimale sera déterminée, fixée et maintenue selon l'application et le processus industriel.

D'un point de vue pratique, l'écart de température T2-T1 est déterminé en utilisant des algorithmes de régression linéaire et/ou non linéaires entre deux périodes de non chauffe qui encadrent une période de chauffe.

On notera qu'une limite supérieure de puissance d'alimentation peut être prévue dans la phase de régulation, afin qu'en cas de non encrassement, la puissance nécessaire pour générer l'écart de température souhaité ne dépasse pas la limite physique de puissance du système électronique.

On notera que la simple détection d'un écart de température significatif, tel que par exemple un écart de 1 degré Celsius, fournit une information importante puisqu'elle est représentative d'un encrassement formé à l'intérieur d'un contenant renfermant un fluide.

Une telle information peut par exemple donner lieu à l'envoi d'un signal d'alarme en vue de prévenir un opérateur ou du personnel de maintenance de l'installation.

Cette fonction de détection peut bien entendu être couplée à la fonction de mesure d'encrassement dans le but de pouvoir également donner une information quantitative sur l'épaisseur de la couche d'encrassement ainsi formée.

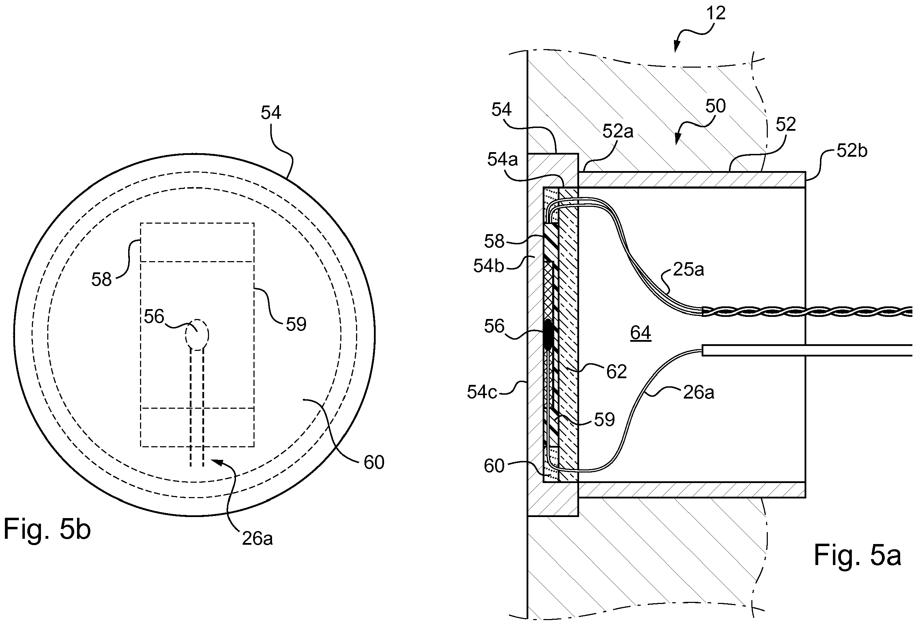

Les courbes illustrées sur les figures 3 et 4 ont été obtenues avec un capteur tel que le capteur 10 représenté sur la figure 1 et qui va être décrit plus en détail sur les figures 5a et 5b.

Le capteur 50 illustré à la figure 5a et qui est destiné à être installé dans une paroi d'un contenant telle que la paroi 12 de la figure 1 comprend un ou plusieurs éléments chauffants, un élément de mesure de température, et un ou plusieurs éléments d'interface tels que décrits en référence à la figure 1.

Plus particulièrement, le capteur 50 est agencé dans une enveloppe cylindrique 52 pourvue à une de ses extrémités longitudinales 52a d'une plaque 54 formant épaulement et qui a par exemple une forme de disque.

L'extrémité opposée 52b est, quant à elle, ouverte sur l'extérieur.

On notera que d'autres formes peuvent être envisagées sans modifier le fonctionnement du capteur.

On notera que la plaque 54 formant épaulement est destinée à être insérée dans un aménagement prévu de façon correspondante dans la paroi 12 du contenant afin d'être montée en position affleurante par rapport à cette dernière.

L'intérieur de cette plaque 54 forme une cavité 54a dans laquelle sont disposés les différents éléments fonctionnels du capteur.

Plus particulièrement, un élément de mesure 56 qui est par exemple un thermocouple de type K est disposé entre, d'une part, une paroi 54b de la plaque 54 et qui fait office d'élément d'interface et, d'autre part, un élément chauffant 58 qui se présente par exemple sous la forme d'un élément résistif de type PT100 qui est par exemple agencé sur un support en céramique.

Plus particulièrement, l'élément de mesure de température pariétale est un thermocouple de type K (classe A/B avec une soudure chaude isolée et revêtue d'une gaine en métal) dont le diamètre est compris entre 0,25 mm et 0,50 mm.

Un élément de mesure de ce type est par exemple commercialisé par la société OMEGA sous la référence KMTSS-IM025U-200 et il s'agit d'un thermocouple de type K dont le diamètre est égal à 0,25 mm.

Un autre exemple d'élément de mesure de température est fourni par la société CIM sous la référence KI050070I1000N (thermocouple K de classe 1 en inconel et de diamètre 0,5 mm).

L'élément chauffant, quant à lui, est plus particulièrement un film de platine déposé sur un élément en céramique ou un fil de platine entouré par un élément céramique.

La longueur de l'élément chauffant varie de 1 mm à 50 mm, sa largeur de 1 mm à 50 mm et son épaisseur de 0,5 mm à 5 mm.

Un exemple d'élément chauffant est fourni par la société PYRO CONTROLE sous la référence L062300-000.

L'élément chauffant en question possède une taille de 1 cm x 1 cm et la zone active (zone chauffante) de cet élément possède une taille de 7 mm x 7mm.

Ainsi, lorsque l'on utilise cet élément chauffant et l'élément de mesure de température fourni par la société OMEGA le rapport surfacique entre les deux éléments est de 245, ce qui signifie que l'élément de mesure de température est 245 fois plus petit que la zone active de l'élément chauffant.

L'élément de mesure de température 56 est à la fois au contact de l'élément chauffant 58 et de la face intérieure de l'élément d'interface 54b qui, à son tour, est en contact avec le fluide par sa face extérieure 54c.

L'élément de mesure 56 est entouré d'un matériau 59 assurant un bon transfert thermique entre l'élément chauffant 58 et l'élément d'interface 54b.

Ce matériau est par exemple constitué d'une pâte à haute conductivité thermique qui est par exemple de l'ordre de 3 W/mK.

On notera que l'élément chauffant 58 n'est pas agencé de façon plane mais présente en coupe longitudinale sur la figure 5a une plus grande épaisseur à une de ses extrémités, afin d'être à la fois en contact avec l'élément de mesure et avec l'élément d'interface.

Cette surépaisseur de l'élément chauffant permet de bien positionner l'élément de mesure entre l'élément chauffant et l'élément d'interface.

Le capteur comprend, en outre, un élément 60 assurant la fonction d'isolant thermique et qui se présente sous la forme d'un matériau enrobant l'élément chauffant 58 comme illustré sur la figure 5b.

Il s'agit par exemple d'une pâte servant d'isolant thermique.

Par ailleurs, le capteur comporte un autre élément support d'isolation thermique 62 réalisé par exemple sous la forme d'une pastille en téflon, par exemple de 2 mm d'épaisseur disposée contre l'élément chauffant 58 afin de fermer la cavité 54a et de positionner l'ensemble des éléments 54, 56 et 58 contre l'élément d'interface.

On notera que le matériau constituant la plaque 54 est par exemple un acier inoxydable et par exemple un inox 316L.

Différentes techniques de montage pourront être utilisées afin d'assurer l'étanchéité entre le capteur 50 et la paroi 12 comme, par exemple, l'emploi d'un joint torique ou d'un raccord standard industriel tel que le raccord 1/2" GAZ.

L'élément de mesure de température 56 et l'élément chauffant 58 sont respectivement reliés à l'unité de traitement 26 (figure 1) et au dispositif 25 par l'intermédiaire de moyens de connexion 26a et 25a.

Les autres composants du système de mesure, à savoir l'unité de traitement du dispositif électrique 25, l'afficheur 27 et d'éventuels moyens de transmission 28 ne sont pas représentés sur les figures 5a et 5b par souci de clarté mais ils sont identiques à ceux décrits en relation avec la figure 1a.

Le dispositif 25 est typiquement un générateur de courant dont on peut fixer la consigne de courant qui sera imposée selon un cycle temporel décidé et/ou programmé par l'unité de traitement 26.

Par ailleurs, un matériau de remplissage 64 tel qu'une résine par exemple de type époxy présentant une bonne tenue en température entre -70°C et +250°C, remplit le logement cylindrique interne à l'enveloppe 52, permettant ainsi de maintenir en position les moyens de connexion 26a et 25a ainsi que les différents composants disposés dans la partie avant du capteur, plus particulièrement dans la cavité aménagée dans la plaque 54.

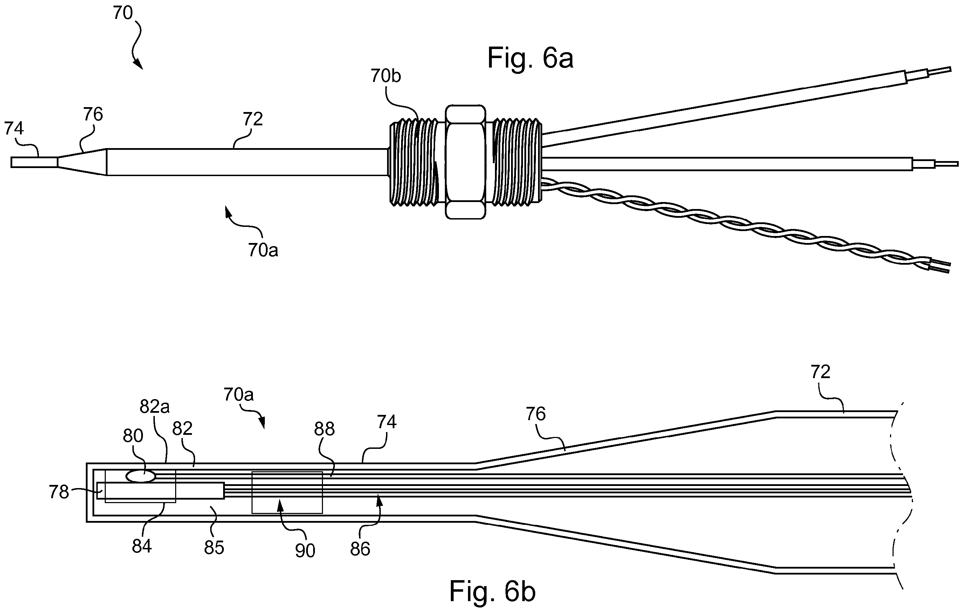

Les figures 6a et 6b illustrent un autre exemple de réalisation détaillé d'un capteur 70 qui reprend la structure du capteur 34 de la figure 2.

Comme représenté sur la figure 6a, le capteur 70 présente une forme extérieure générale allongée selon laquelle sont disposés les différents composants nécessaires au fonctionnement du capteur, à savoir un ou plusieurs éléments chauffants, un élément de mesure et au moins un élément d'interface en contact avec le fluide.

Plus particulièrement, le capteur 70 présente une première partie, dite avant 70a, qui est destinée à être placée dans le fluide présent dans le contenant 32 de la figure 2 et une seconde partie, dite arrière 70b, qui comporte des moyens de fixation du capteur à la paroi 30 du contenant.

Cette partie arrière 70b présente, par exemple, un filetage sur sa surface extérieure, permettant de coopérer avec un trou fileté correspondant pratiqué dans l'épaisseur de la paroi 30.

La partie avant 70a, plus fine que la partie arrière, comporte les éléments sensibles.

Plus particulièrement, la partie avant comprend deux parties d'épaisseurs différentes 72 et 74 séparées l'une de l'autre par une portion intermédiaire 76 formant un rétreint.

La figure 6b est une vue agrandie de la partie avant 70a du capteur et montre en coupe longitudinale les différents composants agencés dans cette dernière.

Ainsi, les composants sensibles sont plus particulièrement disposés à l'intérieur de la portion, par exemple cylindrique 74, de plus petit diamètre.

Le faible diamètre de cette portion d'extrémité (par exemple 3 mm) est choisi pour introduire la moins de perturbations possibles dans le milieu dans lequel les mesures de températures vont être effectuées et, également, pour s'assurer de la meilleure diffusion thermique de l'élément chauffant 78 vers le fluide en circulation.

L'élément chauffant 78 est agencé à l'intérieur de la portion d'extrémité 74, dans la partie terminale de celle-ci, et l'élément de mesure de température 80 est placé au contact de cet élément chauffant et de la paroi de la gaine cylindrique qui forme l'élément d'interface 82 en contact avec le fluide par sa face extérieure 82a.

Les différents éléments 78, 80 et 82 sont ainsi agencés l'un contre l'autre de manière à optimiser le transfert thermique de l'un à l'autre.

Par exemple, l'élément chauffant 78 est un élément résistif à enroulement de type PT100 qui est placé dans une enveloppe céramique

L'élément de mesure de température 80 est, par exemple, un thermocouple de type K dont la soudure chaude est placée au centre de l'élément.

Plus particulièrement, l'élément chauffant 78 est réalisé sous la forme d'un fil bobiné sous un tube de verre ou sous un tube de céramique dont le diamètre est compris entre 0,5 mm et 3 mm et la longueur entre 5 mm et 30 mm.

Un exemple d'élément chauffant est par exemple fourni par la société CIM sous la référence 0309/3145-1 et il présente un diamètre de 5 mm et une longueur de 25 mm.

L'élément de mesure de température 80 peut être identique à celui choisi dans le capteur représenté sur les figures 5a et 5b.

Un adhésif 84, par exemple en Kapton, permet de maintenir en position l'élément chauffant sensiblement au centre de la portion cylindrique 74 et au contact de l'élément de mesure, qui est lui-même au contact de la paroi 82.

Un matériau 85 favorisant la diffusion du flux thermique généré par l'élément chauffant remplit la partie d'extrémité de la portion cylindrique 74, là où sont disposés les éléments sensibles afin d'enrober ces derniers et de favoriser la diffusion du flux thermique du centre de cette partie vers la paroi 82 en fonction de la géométrie de révolution du capteur.

Ce matériau présente une haute conductivité thermique par exemple de 3W/mK.

Des moyens de connexion, par exemple filaires, 86 et 88 raccordent respectivement l'élément chauffant 78 et l'élément de mesure de température 80 au dispositif électrique 25 et à l'unité de traitement 26 de la figure 1. Par ailleurs, un élément d'isolation thermique 90 est positionné à l'intérieur de la gaine cylindrique de la portion 74 entre les composants sensibles et la partie de la portion cylindrique 74 en contact avec le rétreint 76.

Plus particulièrement, cet élément d'isolation thermique 90 isole thermiquement les composants sensibles du reste de la portion cylindrique 74 afin d'éviter toute dissipation thermique le long de celle-ci.

Le bloc 90 est ainsi au contact du matériau de remplissage 84.

Le bloc 90 est par exemple un bloc adhésif en fibres de verre qui est traversé par les moyens de connexions 86 et 88.

En outre, l'espace interne de la partie avant 70a du capteur et qui est placée derrière le bloc isolant 90, est rempli d'un matériau isolant thermiquement et assurant le maintien en position des moyens de connexion.

Il s'agit par exemple d'un matériau présentant une bonne tenue en température entre -70°C et 250°C, et qui est par exemple un caoutchouc de silicone.

Cette conductivité thermique est par exemple de 0,33 W/mK.

Les capteurs des modes de réalisation précédents peuvent être utilisés suivant deux méthodes de fonctionnement.

Une première méthode (premier mode de réalisation du procédé selon l'invention) consiste à utiliser des créneaux temporels périodiques tels que présentés en Figures 3 et 4 (typiquement de 30s à plusieurs minutes) afin de procéder à des chauffes régulières de l'élément chauffant et des périodes de repos. La température étant mesurée en continu et fournie par l'unité 26, cette température est la température du fluide en période de repos (identifiée par T1 en Figure 3 et 4). En période de chauffe, cette température mesurée se stabilise à la valeur T2 qui est la température de peau (ou température pariétale) résultant du transfert de chaleur de l'élément chauffant vers le milieu de mesure à travers l'élément d'interface (ou directement lorsqu'il n'y a pas d'élément d'interface) et, potentiellement, à travers une couche d'encrassement.

En l'absence d'encrassement, la température pariétale (en phase de chauffe) est égale à la température du fluide (aux erreurs de mesure près et selon la résistance thermique générée par l'épaisseur de l'élément d'interface 20 lorsqu'il est présent) car l'intégralité du flux thermique est dissipée dans le milieu de mesure.

En présence d'encrassement, une résistance thermique supplémentaire vient s'opposer au transfert de chaleur vers le milieu de mesure et la température de peau (T2) prend une valeur supérieure à T1.

Ainsi, régulièrement, on connait la température du fluide (T1) et la température de peau (T2). Pour déterminer l'épaisseur de l'encrassement, on applique les formules et équations présentées ci-dessus afin de fournir une information à l'afficheur 27 (typiquement, l'épaisseur d'encrassement et la température du fluide) et/ou au transmetteur 28 afin de délivrer un signal standardisé (typiquement, 4-20mA) pour s'intégrer à une supervision ou à un enregistreur de signaux.

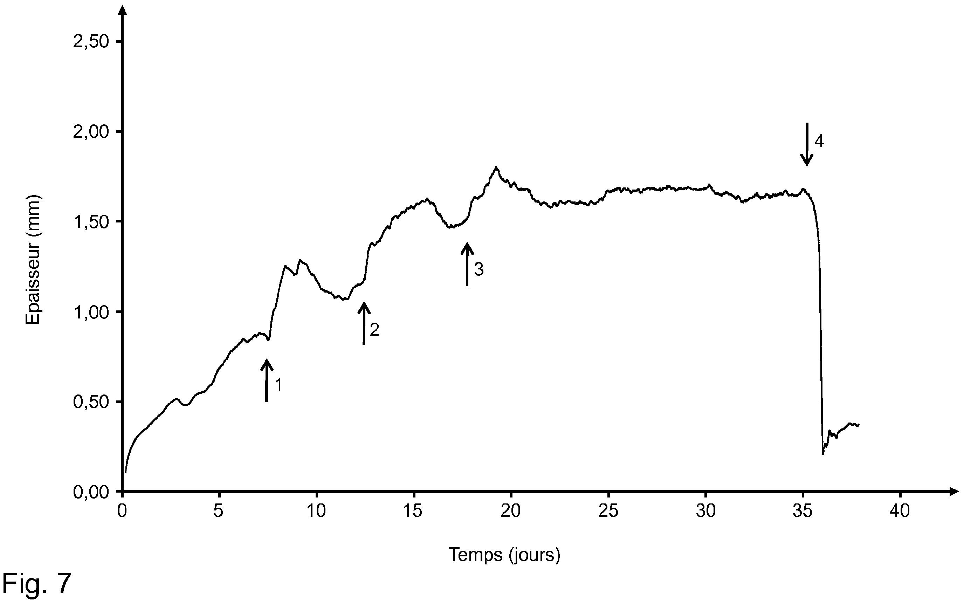

Ainsi, avantageusement, selon cette méthode, on évalue de manière continue l'épaisseur d'encrassement se formant sur la surface du dispositif de mesure (capteur) afin de délivrer une information à l'utilisateur sur l'état de propreté comme illustré sur la courbe de la Figure 7.

Cette méthode ne nécessite ni de calibration préliminaire du dispositif de mesure selon les conditions d'utilisation (débit ou nature du fluide), ni de traitement a posteriori des informations pour déterminer l'épaisseur d'encrassement. D'autre part, des variations de conditions opératoires (dans une certaine limite, comme la température, le débit, la pression) n'influencent pas la mesure d'encrassement (ceci confère à la méthode une fiabilité, et permet une utilisation en continu et une application en milieux industriels) puisque le dispositif recalcule régulièrement la température du fluide.

Enfin, si l'on connaît a priori la nature de l'encrassement se formant et a fortiori sa conduction thermique, alors le système peut délivrer un signal d'épaisseur d'encrassement en unités $\mu$m ou mm ; sinon, le système se fonde sur une valeur par défaut de conduction thermique de la couche d'encrassement pouvant se former et le signal de mesure est, au final, un indicateur selon une unité arbitraire.

Selon une deuxième méthode (deuxième mode de réalisation du procédé selon l'invention), au lieu d'utiliser des cycles répétés à l'infini de phases de chauffe et de non-chauffe pour connaître la température du fluide (obtenue en phase de non-chauffe), on peut procéder par chauffe constante à condition de :

- Soit se situer dans un cas applicatif où la température ne varie pas, ou alors ne varie pas quand on souhaite réaliser les mesures, auquel cas la température est connue et peut être connue de l'unité 26 (T1 est ainsi fixée),
- Soit la température est variable mais on dispose d'autres moyens accessibles pour connaître cette température (par le biais d'un deuxième capteur de température déjà présent dont l'information parvient à l'unité 26 ou facilement dérivable par l'homme de l'art dans le dispositif existant), auquel cas la température T1 est fournie en continu.

La chauffe constante du dispositif permet d'obtenir une information plus dynamique de l'épaisseur d'encrassement, à partir de la différence T2-T1, soit une information quasiment en temps réel au regard des cinétiques de formation et de disparition par traitement des encrassements (typiquement, inférieure à 0,5s).

Ainsi, ce mode de fonctionnement permet de suivre des phénomènes rapides de croissance ou de décroissance d'encrassement tels que le suivi des phases de nettoyage en industrie agro-alimentaire par exemple. Cela est donc utile pour optimiser ces phases de nettoyage (souvent longues et toujours coûteuses) sachant qu'aucun dispositif actuel (ni aucune méthode globale) ne peut suivre en temps réel l'efficacité de ces nettoyages.

On notera que la première méthode pourrait toutefois être utilisée pour suivre des phases de nettoyage dans des industries où la contrainte de temps est moins cruciale.

La figure 7 représente une courbe d'évolution au cours du temps de l'épaisseur d'encrassement formée à la surface d'un capteur tel que celui des figures 2 et 6a-b, monté sur une canalisation de refroidissement industriel telle qu'une tour aéroréfrigérée. Le fluide circulant est de l'eau provenant du milieu naturel (rivière). Le circuit possède des périodes régulières de traitement par voie chimique. Le seul dépôt pouvant se former, dans ces conditions applicatives, est de nature organique (biofilm) dont le coefficient de conductivité thermique est d'environ 0,6 W/m/K.

Le matériau de la paroi est en acier inoxydable de type 316L de même que l'élément d'interface du capteur.

Cette courbe a été obtenue après mise en oeuvre du procédé selon l'invention, à savoir l'application d'une succession de périodes de chauffe et de non chauffe qui ont conduit à des mesures d'écarts de température représentatifs de dépôt de couches d'encrassement.

Le système a fonctionné pendant plusieurs mois sans interruption, produisant, en continu et en ligne, des mesures de l'encrassement organique se développant sur les parois internes de la canalisation et sur la surface du capteur.

Des observations visuelles régulières, en parallèle des mesures en continu, ont permis de montrer la corrélation entre les valeurs fournies par le système et l'état d'encrassement de la canalisation.

La courbe de la figure 7 présente une période extraite représentant pratiquement 40 jours de fonctionnement au cours de laquelle plusieurs événements, repérés par les chiffres 1 à 4 sur le graphe, sont apparus.

Pour faciliter l'interprétation l'axe du temps a été recalé au début de la courbe du graphe à la valeur 0. Au début de cette période, la surface du capteur est propre, tout comme la canalisation. Les événements 1, 2 et 3 correspondent à l'arrivée de nouveaux volumes d'eaux qui viennent enrichir le milieu circulant existant et ainsi favoriser, de nouveau, la croissance d'un encrassement organique.

La courbe présente, en effet, des cinétiques de reprise d'encrassement vers le 7$^{eme}$, 12$^{ème}$ et 18$^{ème}$ jour (évènements respectifs 1, 2 et 3). Les inspections visuelles ont confirmé les mesures.

Entre le 18$^{ème}$ et 35$^{ème}$ jour, le dépôt encrassant s'est stabilisé autour d'une valeur d'environ 1,6mm.

La période de fluctuation observée entre le 20$^{ème}$ et 35$^{ème}$ jour correspond à la période pseudo-mature d'un biofilm mature, période bien connue de l'homme de l'art.

Le 35$^{ème}$ jour (événement 4) un traitement chimique ponctuel est intervenu sans interruption du processus industriel.

Le capteur a enregistré une décroissance de l'encrassement, sans néanmoins un retour à zéro et une reprise quasi-immédiate de l'encrassement.

Tout cela a été confirmé par les observations visuelles et des prélèvements.

**Revendications**

1. Capteur (10 ; 34) de mesure et/ou de détection d'un encrassement se formant sur une face du capteur, **caractérisé en ce qu'**il comporte :

   - un support (22) servant d'isolant thermique,
   - au moins un élément chauffant (16 ; 58) disposé d'un côté sur le support et qui est apte à diffuser, sur commande, un flux thermique homogène contrôlé du côté opposé au support,
   - un unique élément de mesure de température (18 ; 56) ayant des dimensions inférieures à celles dudit au moins un élément chauffant et étant positionné au-dessus et au centre de celui-ci, du côté opposé au support afin d'être dans la partie du flux thermique la plus homogène.

2. Capteur selon la revendication 1, **caractérisé en ce que** l'élément de mesure de température est miniaturisé par rapport audit au moins un élément chauffant en ce sens que l'élément de mesure de température possède une surface dont la taille est au moins 100 fois plus petite que celle de la surface dudit au moins un élément chauffant.

3. Capteur selon l'une des revendications 1 à 2, **caractérisé en ce que** ledit au moins un élément chauffant est apte à générer une densité de puissance thermique comprise entre 1 et 4 mW/mm$^2$.

4. Capteur selon l'une des revendications 1 à 3, **caractérisé en ce qu'**il comporte au moins un élément d'interface conducteur thermique (20 ; 54b) ayant deux faces opposées, l'une des faces, dite intérieure étant disposée contre l'élément de mesure et l'autre face, dite extérieure, étant destinée à être en contact avec un fluide.

5. Capteur selon la revendication 4, **caractérisé en ce que** ledit au moins un élément d'interface présente une résistance thermique inférieure ou égale à 4°C/W.

6. Capteur selon la revendication 4 ou 5, **caractérisé en ce que** ledit au moins un élément d'interface est en acier inoxydable.

7. Capteur selon l'une des revendications 1 à 6, **caractérisé en ce qu'**il présente une forme générale allongée selon une direction longitudinale, ledit au moins un élément chauffant (16 ; 58) et l'élément de mesure de température (18 ; 56) étant alignés l'un derrière l'autre suivant la direction longitudinale du capteur.

8. Capteur selon l'une des revendications 1 à 6, **caractérisé en ce qu'**il présente une forme générale allongée selon une direction longitudinale, ledit au moins un élément chauffant et l'élément de mesure de température étant alignés l'un derrière l'autre suivant une direction perpendiculaire à la direction longitudinale du capteur.

9. Système de mesure ou de détection d'un encrassement formé sur une face du capteur selon l'une des revendications 1 à 8 qui est exposée à un fluide, comprenant :

   - des moyens de détermination d'un écart de température entre, d'une part, la température pariétale mesurée par l'élément de mesure de température lorsque ledit au moins un élément chauffant diffuse un flux thermique et, d'autre part, la température du fluide,
   - des moyens de calcul de l'épaisseur de l'encrassement formé sur la face du capteur exposée au fluide à partir de l'écart de température déterminé.

10. Procédé de mesure et/ou de détection de l'encrassement formé sur le capteur selon l'une des revendications 1 à 8 lorsque celui-ci est installé dans une paroi d'un contenant renfermant un fluide et comporte une face exposée au fluide.

11. Procédé selon la revendication 10, **caractérisé en ce qu'**il comprend les étapes suivantes :

- détermination d'un écart de température entre, d'une part, la température pariétale mesurée par l'élément de mesure de température lorsque ledit au moins un élément chauffant diffuse un flux thermique, et d'autre part, la température du fluide,
- calcul de l'épaisseur de l'encrassement formé sur la face du capteur exposée au fluide à partir de l'écart de température déterminé.

12. Procédé selon la revendication 11, **caractérisé en ce que** la détermination d'un écart de température comprend les étapes suivantes :

- alternance de phases de commande de la diffusion d'une puissance thermique par ledit au moins un élément chauffant et de non diffusion d'une puissance thermique,
- mesure en permanence durant chacune des phases précitées de la température pariétale par l'élément de mesure de température,
- détermination d'un écart de température entre les températures mesurées par l'élément de mesure de température.

13. Procédé selon la revendication 12, **caractérisé en ce que** ledit au moins un élément chauffant est commandé pour diffuser une densité de puissance thermique comprise entre 1 et 4 mW/mm$^2$.

14. Procédé selon la revendication 12 ou 13, **caractérisé en ce que** l'étape de commande de la diffusion d'un flux thermique par ledit au moins un élément chauffant comprend une étape de génération d'un signal de modulation de puissance dudit au moins un élément chauffant.

## Patentansprüche

1. Sensor (10; 34) zur Messung und/oder zum Nachweis einer Verunreinigung, die sich auf einer Seite des Sensors bildet, **dadurch gekennzeichnet, dass** er Folgendes umfasst:

- einen Träger (22), der als thermische Isolierung dient,
- mindestens ein Heizelement (16; 58), das auf einer Seite auf dem Träger angeordnet ist, und das dazu ausgelegt ist, um bei Steuerung einen kontrollierten homogenen thermischen Fluss auf der gegenüber liegenden Seite des Trägers zu diffundieren,
- ein einziges Element zur Messung der Temperatur (18; 56), aufweisend Abmessungen, die kleiner als diejenigen des mindestens einen Heizelements sind und unter und im Zentrum dieses positioniert sind, auf der Seite, die dem Träger gegenüber liegt, um sich in dem homogensten Teil des thermischen Flusses zu befinden.

2. Sensor nach Anspruch 1, **dadurch gekennzeichnet, dass** das Element zur Messung der Temperatur mit Bezug auf das mindestens eine Heizelement in dem Sinne miniaturisiert ist, dass das Element zur Messung der Temperatur eine Oberfläche aufweist, deren Größe mindestens 100 mal kleiner als diejenige der Oberfläche des mindestens einen Heizelements ist.

3. Sensor nach einem der Ansprüche 1 bis 2, **dadurch gekennzeichnet, dass** das mindestens eine Heizelement ausgelegt ist, um eine Dichte der Wärmeleistung zu erzeugen, die zwischen 1 und 4 mW/mm$^2$ liegt.

4. Sensor nach einem der Ansprüche 1 bis 3, **dadurch gekennzeichnet, dass** er mindestens ein thermisch leitendes Schnittstellenelement (20; 54b) umfasst, aufweisend zwei gegenüber liegende Seiten, wobei eine der Seiten, genannt innere Seite, gegen das Element zur Messung angeordnet ist, und das andere Element, genannt äußeres Element, dazu bestimmt ist, in Kontakt mit einem Fluid zu sein.

5. Sensor nach Anspruch 4, **dadurch gekennzeichnet, dass** das mindestens eine Schnittstellenelement einen thermischen Widerstand von weniger als oder gleich wie 4 °C/W aufweist.

**6.** Sensor nach Anspruch 4 oder 5, **dadurch gekennzeichnet, dass** das mindestens eine Schnittstellenelement aus Edelstahl ist.

**7.** Sensor nach einem der Ansprüche 1 bis 6, **dadurch gekennzeichnet, dass** er eine im Allgemeinen verlängerte Form gemäß einer Längsrichtung aufweist, wobei das mindestens eine Heizelement (16; 58) und das Element zur Messung der Temperatur (18; 56) hintereinander gemäß der Längsrichtung des Sensors ausgerichtet sind.

**8.** Sensor nach einem der Ansprüche 1 bis 6, **dadurch gekennzeichnet, dass** er eine im Allgemeinen verlängerte Form gemäß einer Längsrichtung aufweist, wobei das mindestens eine Heizelement und das Element zur Messung der Temperatur hintereinander gemäß einer senkrechten Richtung zur Längsrichtung des Sensors ausgerichtet sind.

**9.** System zur Messung oder zum Nachweis einer Verunreinigung, gebildet auf einer Seite des Sensors, nach einem der Ansprüche 1 bis 8, die einem Fluid ausgesetzt ist, umfassend:

- Mittel zur Bestimmung einer Temperaturabweichung zwischen einerseits der seitlichen Temperatur, gemessen vom Element zur Messung der Temperatur, wenn das mindestens eine Heizelemente einen thermischen Fluss diffundiert, und andererseits der Temperatur des Fluids,
- Mittel zur Berechnung der Dicke der Verunreinigung, gebildet auf der Seite des Sensors, die dem Fluid ausgesetzt ist, ausgehend von der vorbestimmten Temperaturabweichung.

**10.** Verfahren zur Messung und/oder zum Nachweis der Verschmutzung, gebildet auf dem Sensor nach einem der Ansprüche 1 bis 8, wenn dieser in einer Wand eines Behälters installiert ist, der ein Fluid einschließt und eine Seite umfasst, die dem Fluid ausgesetzt ist.

**11.** Verfahren nach Anspruch 10, **dadurch gekennzeichnet, dass** es die folgenden Schritte umfasst:

- Bestimmen eines Teils der Temperatur zwischen einerseits der seitlichen Temperatur, gemessen vom Element zur Messung der Temperatur, wenn das mindestens eine Heizelement einen thermischen Fluss diffundiert, und andererseits der Temperatur des Fluids,
- Berechnen der Dicke der Verunreinigung, gebildet auf der Seite des Sensors, die dem Fluid ausgesetzt ist, ausgehend von der vorbestimmten Tempeaturabweichung.

**12.** Verfahren nach Anspruch 11, **dadurch gekennzeichnet, dass** die Bestimmung einer Temperturabweichung die folgenden Schritte umfasst:

- Alternieren der Steuerschritte der Diffusion einer Wärmeleistung durch das mindestens eine Heizlement und der nicht Diffusion einer Wärmeleistung,
- permanentes Messen während jedes der oben angegebenen Schritte der seitlichen Temperatur durch das Element zur Messung der Temperatur,
- Bestimmen einer Temperaturabweichung zwischen den Temperaturen, gemessen durch das Element zu Messung der Temperatur.

**13.** Verfahren nach Anspruch 12, **dadurch gekennzeichnet, dass** das mindestens eine Heizelement gesteuert wird, um eine Dichte der Wärmeleistung zu diffundieren, die zwischen 1 und 4 mW/mm$^2$ liegt.

**14.** Verfahren nach Anspruch 12 oder 13, **dadurch gekennzeichnet, dass** der Schritt des Steuerns der Diffusion des thermischen Flusses durch das mindestens eine Heizelement einen Schritt des Erzeugens eines Signals zur Modulierung der Leistung des mindestens einen Heizelements umfasst.

**Claims**

**1.** A sensor (10; 34) for measuring and/or detecting fouling forming on a face of the sensor, **characterized in that** it includes:

- a support (22) serving as thermal insulation,
- at least one heating element (16; 58) positioned on one side on the support and that is able to diffuse, on command, a controlled homogeneous heat flow on the side opposite the support,

- a single temperature measuring element (18; 56) having dimensions smaller than those of said at least one heating element and being positioned above and at the center thereof, on the side opposite the support so as to be in the most homogeneous part of the heat flow.

2. The sensor according to claim 1, **characterized in that** the temperature measuring element is miniaturized relative to said at least one heating element in the sense that the temperature measuring element has a surface whose size is at least 100 times smaller than that of the surface of said at least one heating element.

3. The sensor according to one of claims 1 to 2, **characterized in that** said at least one heating element is able to generate a thermal power density comprised between 1 and 4 mW/mm$^2$.

4. The sensor according to one of claims 1 to 3, **characterized in that** it includes at least one thermally conducting interface element (20; 54b) having two opposite faces, one of the faces, called inner, being positioned against the measuring element, and the other face, called outer, being intended to be in contact with a fluid.

5. The sensor according to claim 4, **characterized in that** said at least one interface element has a thermal resistance less than or equal to 4°C/W.

6. The sensor according to claim 4 or 5, **characterized in that** said at least one interface element is made from stainless steel.

7. The sensor according to one of claims 1 to 6, **characterized in that** it has an elongated general shape in a longitudinal direction, said at least one heating element (16; 58) and the temperature measuring element (18; 56) being aligned behind one another in the longitudinal direction of the sensor.

8. The sensor according to one of claims 1 to 6, **characterized in that** it has an elongated general shape in a longitudinal direction, said at least one heating element and the temperature measuring element being aligned behind one another in a direction perpendicular to the longitudinal direction of the sensor.

9. A system for measuring or detecting fouling formed on a face of the sensor according to one of claims 1 to 8 that is exposed to a fluid, comprising:

- means for determining a temperature deviation between, on the one hand, the parietal temperature measured by the temperature measuring element when said at least one heating element diffuses a heat flow, and, on the other hand, the temperature of the fluid,
- means for calculating the thickness of the fouling formed on the face of the sensor exposed to the fluid from the determined temperature deviation.

10. A method for measuring and/or detecting fouling formed on the sensor according to one of claims 1 to 8 when the latter is installed in a wall of a container containing a fluid and includes a face exposed to the fluid.

11. The method according to claim 10, **characterized in that** it comprises the following steps:

- determining a temperature deviation between, on the one hand, the parietal temperature measured by the temperature measuring element when said at least one heating element diffuses a heat flow, and on the other hand, the temperature of the fluid,
- calculating the thickness of the fouling formed on the face of the sensor exposed to the fluid from the determined temperature deviation.

12. The method according to claim 11, **characterized in that** the determination of a temperature deviation comprises the following steps:

- alternating phases to command the diffusion of a thermal power by said at least one heating element and the non-diffusion of a thermal power,
- continuously measuring, during each of the aforementioned phases, the parietal temperature via the temperature measuring element,
- determining a temperature deviation between the temperatures measured by the temperature measuring element.

13. The method according to claim 12, **characterized in that** said at least one heating element is commanded to diffuse a thermal power density comprised between 1 and 4 mW/mm$^2$.

14. The method according to claim 12 or 13, **characterized in that** the step for commanding the diffusion of a heat flow by said at least one heating element comprises a step for generating a power modulation signal of said at least one heating element.

Fig. 1

Fig. 2

Fig. 3

Fig. 4

Fig. 5b

Fig. 5a

EP 2 382 453 B1

Fig. 6a

Fig. 6b

Fig. 7

**EP 2 382 453 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2885694
- EP 1878501 A
- FR 2897930
- FR 2788600
- FR 2493523